# EUROPEAN PATENT SPECIFICATION

(11) **EP 2 994 816 B1**
(45) Date of publication and mention of the grant of the patent: **20.07.2022**
(21) Application number: 13888272.5
(22) Date of filing: 10.05.2013
(51) Int. Cl.: G06F 3/044, H01L 23/522, G06F 3/041

(54) **TOUCH SENSOR ARRAY AND METHOD THEREFOR**
BERÜHRUNGSSENSORANORDNUNG UND VERFAHREN HIERFÜR
RÉSEAU DE CAPTEURS TACTILES ET MÉTHODE CORRESPONDANTE

(43) Date of publication of application: 16.03.2016
(73) Proprietor: Nokia Technologies Oy, 02610 Espoo (FI)
(72) Inventor: LAITINEN, Mikko Ilmari, FI-24800 Halikko (FI)
(74) Representative: Swindell & Pearson Limited
(86) International application number: PCT/FI2013/050512
(87) International publication number: WO 2014/207287

(56) References cited:
- EP-A2- 2 141 573
- WO-A1-2012/053498
- WO-A2-2005/114369
- JP-A- 2011 154 950
- US-A- 5 457 289
- US-A1- 2009 085 891
- US-A1- 2009 273 570
- US-A1- 2010 123 681
- US-A1- 2010 201 647
- US-A1- 2010 214 247
- US-A1- 2011 007 021
- US-A1- 2012 075 215
- US-A1- 2012 075 249
- US-A1- 2012 327 016

## Description

### TECHNOLOGICAL FIELD

Embodiments of the present invention relate to an apparatus. In particular, they relate to an apparatus comprising a plurality of capacitive sensor electrodes distributed over a sensing area.

### BACKGROUND

Current touch sensitive displays may use a plurality of capacitive sensor electrodes distributed over a sensing area. The capacitive sensor electrodes sense a proximal grounded object such as a user's finger touching the sensing area.

US 2009/085891 A1 relates to a capacitive touch panel including a first electrode layer and a second electrode layer, the first electrode layer having a plurality of electrode strings extended along a first direction and the second electrode layer having a plurality of electrodes connected in series along a second direction.

US 2010/123681 A1 discloses a touch panel including a substrate on which a touch layer and a color filter layer are disposed. The touch layer included touch electrodes, signal lines and a shielding layer. The touch electrodes are disposed in the touch area and above the shielding layer. The signal lines are disposed above the shielding layer. In some examples, touch electrodes in the touch panel are disposed in different film layers.

US 2009/273570 A1 discloses a capacitive multi-touch sensor panel in which both row and column traces may be formed on a single conducting surface.

US 2012/075249 A1 discloses a method and apparatus for operating an input device having an array of capacitive sensor electrodes and a proximity sensor electrode.

WO 2012/053498 A1 discloses a touch switch such that it is possible to reduce areas of decreased detection sensitivity wherein touch by a finger cannot be detected.

JP 2011/154950 A discloses a touch switch which can be stored and readily carried in a folded state.

US 2010/201647 A1 relates to a capacitive touch sensor for use with a display device.

EP 2141573 A2 discloses a touch screen including display pixels with capacitive elements, the touch screen having first common voltage lines connecting capacitive elements in adjacent display pixels, and a second common voltage line connecting first common voltage lines.

US 2012/075215 A1 discloses a single-layer implemented two-dimensional touchpad including two groups of sensing units arranged abreast along two directions.

US 2010/214247 A1 discloses a capacitive touch panel including a substrate having a pattern-forming surface, a color pixel layer formed on the substrate, and a patterned conductive layer formed on the pattern-forming surface of the substrate.

US 2011/007021 A1 discloses improved capacitive touch and hover sensing with a sensor array.

US 5457289 A discloses a frontally shielded capacitive touch sensor system including a capacitive touch sensor having a touch sensitive surface.

WO 2005/114369 A2 discloses a touch panel having a transparent capacitive sensing medium configured to detect multiple touches or near touches that occur at the same time and at distinct locations in the plane of the touch panel.

US 2012/327016 A1 discloses a capacitive position sensor comprising a substrate having an arrangement of electrodes mounted on a single surface thereof, the electrodes arranged so as to define an array of sensing cells arranged in columns and rows to form a sensing area.

### BRIEF SUMMARY

The present invention is defined by the independent claims. The dependent claims define embodiments of the present invention.

### BRIEF DESCRIPTION

For a better understanding of various examples of embodiments of the present disclosure reference will now be made by way of example only to the accompanying drawings in which:
Fig 1 illustrates an example of an apparatus comprising a sensing arrangement comprising a plurality of capacitive sensor electrodes distributed over a sensing area in at least two different layers;
Fig 2 illustrates an example of a sensing arrangement comprising
   a plurality of capacitive sensor electrodes distributed over a sensing area in at least two different layers; Fig 3 schematically illustrates an example of a cross-section through a sensing arrangement;
Figs 4A and 4B illustrate an example of layers of a sensing arrangement and the arrangement, according to a first embodiment, of capacitive sensor electrodes and conductive traces within the layers;
Fig 4C illustrates in more detail an example, according to the first embodiment, of a configuration of conductive traces operatively connected to capacitive sensor electrodes in a lower layer;
Figs 5A and 5B illustrate an example of layers of a sensing arrangement and the arrangement, according to a second embodiment, of capacitive sensor electrodes and conductive traces within the layers;
Fig 5C illustrates in more detail an example, according to the second embodiment, of a configuration of conductive traces operatively connected to capacitive sensor electrodes in a lower layer;
Figs 6A and 6B illustrate an example of layers of a sensing arrangement and the arrangement, according to a third embodiment, of capacitive sensor electrodes and conductive traces within the layers;
Fig 6C and 6D illustrates in more detail an example, according to the third embodiment, of the configurations of conductive traces operatively connected to capacitive sensor electrodes in a lower layer;
Fig 7 illustrates an example of a method;
Fig 8A illustrates an example of a touch panel module;
Fig 8B illustrates an example of a touch sensitive display module; and
Fig 8C illustrates an example of an electronic device.

### DETAILED DESCRIPTION

The Figures illustrate an apparatus 2 comprising: a sensing arrangement 5 comprising: a first array 4₁ of capacitive sensor electrodes 6 comprising a first plurality N₁ of distinct capacitive sensor electrodes 6 distributed in a first layer 16₁ over a first sensing area 8₁; first conductive traces 10₁ operatively connected to the first plurality N₁ of distinct capacitive sensor electrodes 6;
a second array 4₂ of capacitive sensor electrodes 6 comprising a second plurality N₂ of distinct capacitive sensor electrodes 6 distributed in a second layer 16₂ over a second sensing area 8₂, wherein the first layer 16₁ and the second layer 16₂ are different layers; and second conductive traces 10₂ operatively connected to the second plurality N₂ of distinct capacitive sensor electrodes 6.

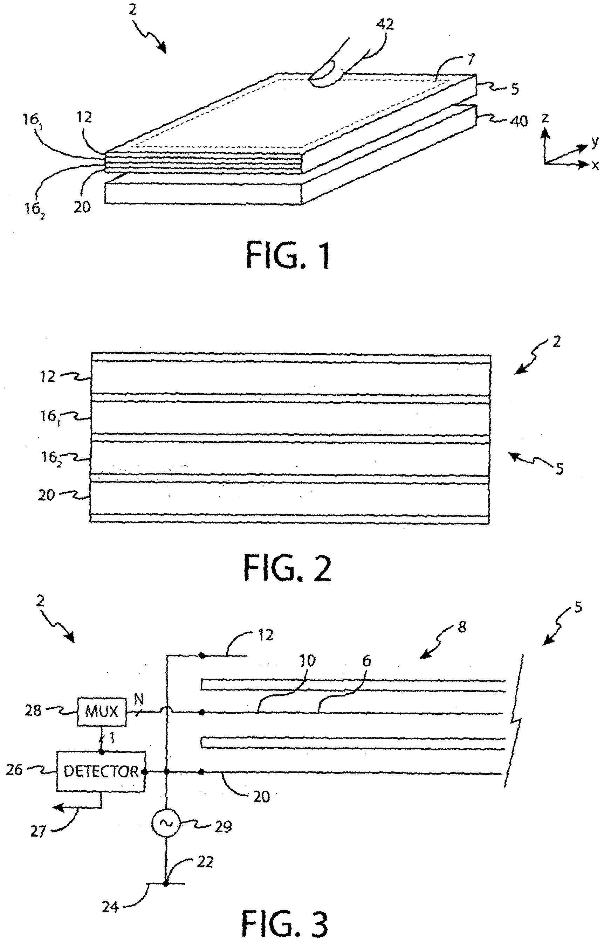

Fig 1 illustrates an apparatus 2 comprising: a sensing arrangement 5 comprising a plurality of capacitive sensor electrodes 6 distributed over a sensing area 8 and conductive traces 10 at least partially distributed over the sensing area 8.

In this example, the apparatus 2 overlies a display 40 and operates as a capacitive touch panel for the display 40. The display 40 and the apparatus 2 in combination form a touch sensitive display configured to detect a variation in capacitance arising from proximity of a user input device 42 to one or more of the plurality of capacitive sensor electrodes 6.

The sensing arrangement 5 is configured to sense a variation in capacitance arising from proximity of a user input device 42 at or over the sensing area 8 of a touch surface 7. In this example the user input device 42 is a user's finger.

The apparatus 2 is configured to sense the (x, y) position of the user's finger within the sensing area 8 when it touches the sensing area 8 of the touch surface 7. In some examples, the apparatus 2 may additionally provide a (z) position of the user's finger when it is close to but not touching the sensing area 8 of the touch surface 7 and/or provide an (x, y) position of the user's finger when it is close to but not yet touching the sensing area of the touch surface 7. The apparatus 2 may therefore provide for not only two- dimensional sensing but also three-dimensional sensing.

The apparatus 2 may optionally comprise a first shield electrode 12 overlying conductive traces 10 at least outside the sensing area 8; and a second shield electrode 20 underlying, in the sensing area 8, the conductive traces 10 and the capacitive sensor electrodes 6.

In this apparatus 2, the capacitive sensor electrodes 6 distributed over the sensing area 8 comprise multiple arrays 4ₙ of capacitive sensor electrodes 6, each array 4ₙ comprising a plurality Nₙ of distinct capacitive sensor electrodes 6. At least some of the multiple arrays 4ₙ of capacitive sensor electrodes 6 occupy different layers 16.

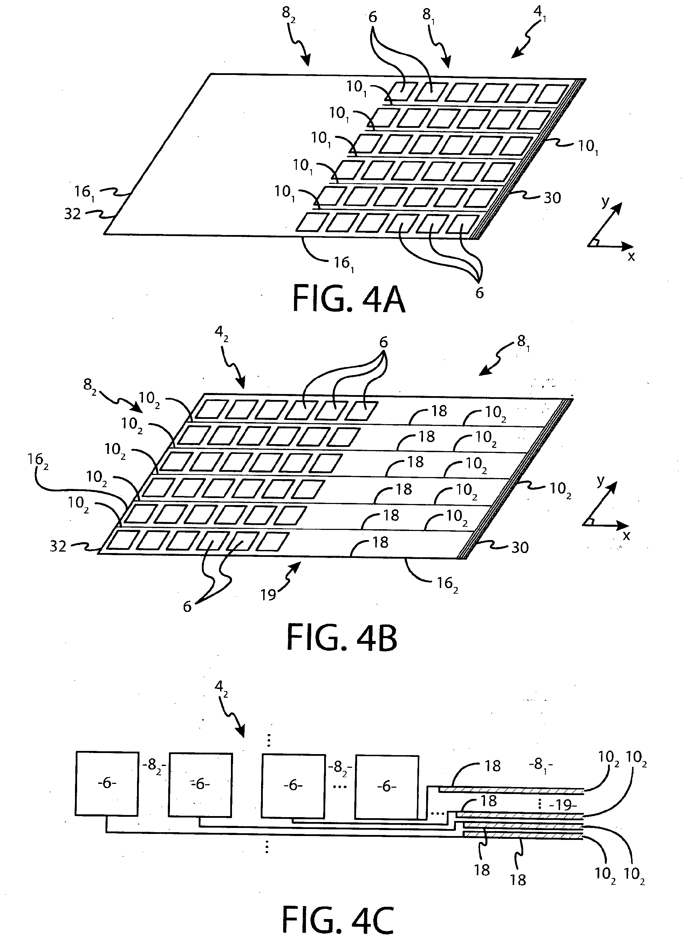

For example, as illustrated in Figs 4A, 4B, 5A, 5B, 6A, 6B, a first array 4₁ of capacitive sensor electrodes 6 comprising a first plurality N₁ of distinct capacitive sensor electrodes 6 is distributed in a first layer 16₁ over a first sensing area 8₁. A second array 42 of capacitive sensor electrodes 6 comprising a second plurality N₂ of distinct capacitive sensor electrodes 6 is distributed in a second layer 16₂ over a second sensing area 8₂. The first layer 16₁ and the second layer 16₂ are different layers.

First conductive traces 10₁ are operatively connected to the first plurality N₁ of distinct capacitive sensor electrodes 6 and second conductive traces 10₂ are operatively connected to the second plurality N₂ of distinct capacitive sensor electrodes 6.

The first array 4₁ of capacitive sensor electrodes 6 is configured to sense the (x, y) position of the user's finger within the first sensing area 8₁ when it touches the first sensing area 8₁ of the touch surface 7. In some examples, the apparatus 2 may additionally provide a (z) position of the user's finger when it is close to but not touching the first sensing area 8₁ of the touch surface 7 and/or provide an (x, y) position of the user's finger when it is close to but not yet touching the first sensing area 8₁ of the touch surface 7. The apparatus 2 may therefore provide for not only two-dimensional sensing but also three-dimensional sensing.

The second array 4₂ of capacitive sensor electrodes 6 is configured to sense the (x, y) position of the user's finger within the second sensing area 8₂ when it touches the second sensing area 8₂ of the touch surface 7. In some examples, the apparatus 2 may additionally provide a (z) position of the user's finger when it is close to but not touching the second sensing area 8₂ of the touch surface 7 and/or provide an (x, y) position of the user's finger when it is close to but not yet touching the second sensing area 8₂ of the touch surface 7. The apparatus 2 may therefore provide for not only two-dimensional sensing but also three-dimensional sensing.

Figs 4 A and 4B illustrate a first array 4₁ of capacitive sensor electrodes 6 and a second array 4₂ of capacitive sensor electrodes 6, that occupy different layers 16 and are used in combination to detect touch input at or over the sensing area 8.

Fig 4A illustrates an example of a first array 4₁ of capacitive sensor electrodes 6 comprising a first plurality N₁ of distinct capacitive sensor electrodes 6 distributed in a first layer 16₁ over a first sensing area 8₁. First conductive traces 10₁ are operatively connected to the first plurality Ni of distinct capacitive sensor electrodes 6.

Fig 4B illustrates an example of a second array 4₂ of capacitive sensor electrodes 6 comprising a second plurality N₂ of distinct capacitive sensor electrodes 6 distributed in a second layer 16₂ over a second sensing area 8₂. The first layer 16₁ and the second layer 16₂ are different layers. Second conductive traces 10₂ area operatively connected to the second plurality N₂ of distinct capacitive sensor electrodes 6.

The first sensing area 8₁ and the second sensing area 8₂ do not overlap.

Referring to Fig 4B, the second layer 16₂ underlies the first layer 16₁.

The first array 4₁ of capacitive sensor electrodes 6 is positioned proximal to a first edge 30 of the sensing arrangement 5 and the second array 4₂ of capacitive sensor electrodes 6 is positioned distal from the first edge 30 of the sensing arrangement 5.

The second conductive traces 10₂ are routed from the first edge 30 underneath the first array 4₁ of capacitive sensor electrodes 6 in the first layer 16₁ to the second array 4₂ of capacitive sensor electrodes 6 in the second layer 16₂. The second conductive traces 10₂ where they are routed underneath the first array 4₁ comprise conductive trace portions 18 that have a higher conductivity per unit length than the first conductive traces 10₁.

The higher conductivity conductive trace portions 18 are wider than the first conductive traces 10₁ where they extend across an area 19 overlapping the first array 4₁ of capacitive sensor electrodes 6.

Fig 4C illustrates in more detail an example, according to the first embodiment, of a configuration, in a lower layer 16₂, of second conductive traces 10₂ operatively connected to the second array 4₂ of capacitive sensor electrodes 6.

For clarity of illustration, only one row/column of the second array 4₂ of capacitive sensor electrodes 6 is explicitly illustrated and only some of the capacitive sensor electrodes 6 in that row/column are illustrated. Only the second conductive traces 10₂ operatively connected to the illustrated capacitive sensor electrodes 6 are explicitly illustrated.

In Fig 4C, the second conductive traces 10₂ where they are routed underneath the first array 4₁ of capacitive sensor electrodes 6 comprise wider portions 18 that have a higher conductivity per unit length than the first conductive traces 10₁. The higher conductivity conductive trace portions 18 are wider than the first conductive traces 10₁ where they extend across the area 19 overlapping the first array 4₁ of capacitive sensor electrodes 6. Bends in the second conductive traces 10₂ are used to route the higher conductivity portions 18 of the second conductive traces 10₂ underneath capacitive sensor electrodes 6 of the first array 4₁ of capacitive sensor electrodes 6

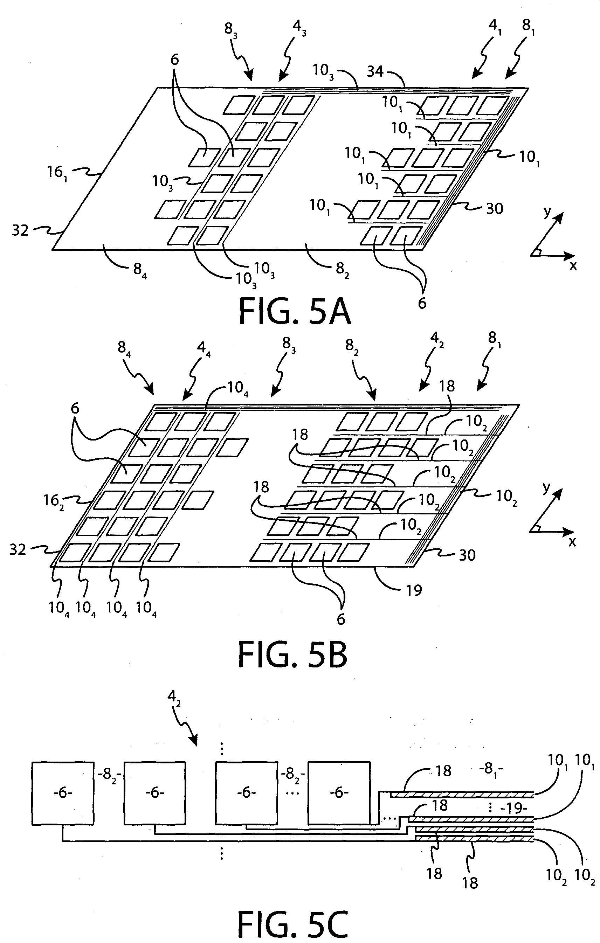

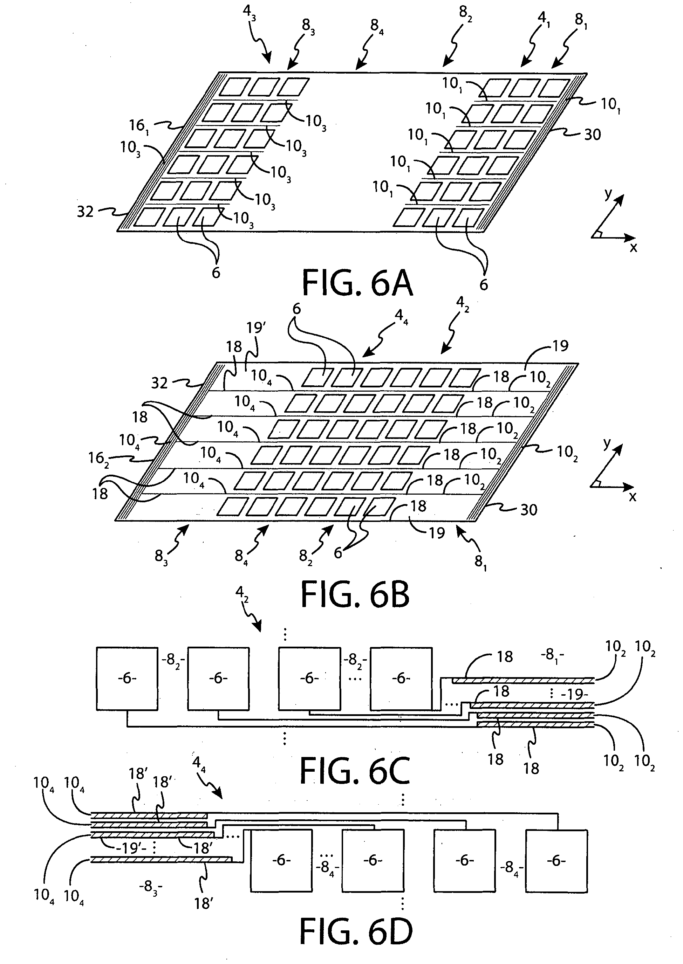

Figs 5 A and 6A illustrate a first array 4 of capacitive sensor electrodes 6 and a third array 4₃ of capacitive sensor electrodes 6, that occupy the same layer 16₁ and are used in combination to detect touch input. Fig 5B and 6B illustrate a second array 4₂ of capacitive sensor electrodes 6 and a fourth array 4₄ of capacitive sensor electrodes 6, that occupy the same layer 16₂.

The first array 4₁ of capacitive sensor electrodes 6, the third array 4₃ of capacitive sensor electrodes 6, the second array 4₂ of capacitive sensor electrodes 6 and the fourth array 4₄ of capacitive sensor electrodes 6 are used in combination to detect touch input in or over the sensing area 8.

The third array 4₃ of capacitive sensor electrodes 6 comprises a third plurality N₃ of distinct capacitive sensor electrodes 6 distributed in the first layer 16₁ over a third sensing area 8₃.. Third conductive traces 10₃ are operatively connected to the third plurality N₃ of distinct capacitive sensor electrodes 6.

The fourth array 4₄ of capacitive sensor electrodes 6 comprises a fourth plurality N₄ of distinct capacitive sensor electrodes 6 distributed, in the second layer 16₂, over a fourth sensing area 8₄. Fourth conductive traces 10₄ are operatively connected to the fourth plurality N₄ of distinct capacitive sensor electrodes 6.

The first array 4₁ of capacitive sensor electrodes 6 is configured to sense at least two positional components (x, y) of a touch input that positions the touch input within the first sensing area 8₁. The second array 4₂ of capacitive sensor electrodes 6 configured to sense at least two positional components (x,y) of a touch input that positions the touch input within the second sensing area 8₂. The third array 4₃ of capacitive sensor electrodes 6 is configured to sense at least two positional components (x, y) of a touch input that positions the touch input within the fourth sensing area 8₃. The fourth array 4₄ of capacitive sensor electrodes 6 configured to sense at least two positional components (x, y) of a touch input that positions the touch input within the fourth sensing area 8₄.

The first sensing area 8₁, the second sensing area 8₂, the third sensing area 8₃ and the fourth sensing area 8₄ are non- overlapping or substantially non-overlapping.

Referring to Figs 5A and 5B, the first layer 16₁ and the second layer 16₂ may be integrated into a single apparatus 2. Referring to Figs 6A and 6B, the first layer 16₁ and the second layer 16₂ may be integrated into a single apparatus 2.

Referring to Figs 5A and 5B, the first array 4₁ is positioned adjacent a first edge 30 and the third array 4₃ is positioned distal from the first edge 30 and distal from a second edge 32 that opposes the first edge 30.

In this example, the first array 4₁ and the third array 4₃ have the same layout pattern of capacitive sensor electrodes 6, however the third array 4₃ is shifted in the first direction (x).

The first conductive traces 10₁ extend parallel to a first direction (x) from an edge 30 into the first sensing area 8₁. The first conductive traces 10₁ are separated in a second direction (y) (orthogonal to the x direction) so that the first conductive traces 10₁ are distributed over the first sensing area 8₁.

The third conductive traces 10₃ extend parallel to the first direction (x), from the first edge 30, along a side 34 orthogonal to the first edge 30 outside the sensing area 8. The third conductive traces 10₃ are grouped together along the side 34 and do not pass over but run beside the first sensing area 8₁.

The third conductive traces 10₃ then extend from the side 34 in the second direction (y) into the third sensing area 8₃. The third conductive traces 10₃ are separated in the first direction (x) so that the third conductive traces 10₃ are distributed over the third sensing area 8₃. The second conductive traces 10₂ extend, from the first edge 30, parallel to the first direction (x) underneath the first sensing area 8₁ into the second sensing area 8₂.

The second conductive traces 10₂ are separated in a second direction (y) so that the second conductive traces 10₂ are distributed over the first sensing area 8₁ and the second sensing area 8₂.

The second conductive traces 10₂ comprise conductive trace portions 18 that have a higher conductivity per unit length than the first conductive traces 10₁.

The higher conductivity conductive trace portions 18 may, for example, be wider than the first conductive traces 10₁ where they extend across an area 19 overlapping the first array 4₁ of capacitive sensor electrodes 6.

Fig 5C illustrates in more detail an example, according to the second embodiment, of a configuration, in a lower layer 16₂, of second conductive traces 10₂ operatively connected to the second array 4₂ of capacitive sensor electrodes 6.

For clarity of illustration, only one row/column of the second array 4₂ of capacitive sensor electrodes 6 is explicitly illustrated and only some of the capacitive sensor electrodes 6 in that row/column are illustrated. Only the second conductive traces 10₂ operatively connected to the illustrated capacitive sensor electrodes 6 are explicitly illustrated.

In Fig 5C, the second conductive traces 10₂ where they are routed underneath the first array 4₁ of capacitive sensor electrodes 6 comprise wider portions 18 that have a higher conductivity per unit length than the first conductive traces 10₁. The higher conductivity conductive trace portions 18 are wider than the first conductive traces 10₁ where they extend across the area 19 overlapping the first array 4₁ of capacitive sensor electrodes 6. Bends in the second conductive traces 10₂ are used to route the higher conductivity portions 18 of the second conductive traces 10₂ underneath capacitive sensor electrodes 6 of the first array 4₁ of capacitive sensor electrodes 6.

The fourth conductive traces 10₄ extend parallel to the first direction (x), from the first edge 30, along the side 34 orthogonal to the first edge 30 outside the sensing area 8. The fourth conductive traces 10₄ are grouped together along the side 34 and do not pass over, but pass beside, the first sensing area 8₁ and the second sensing area 8₂.

The fourth conductive traces 10₄ then extend from the side 34 in the second direction (y) into the fourth sensing area 8₄. The fourth conductive traces 10₄ are separated in the first direction (x) so that the fourth conductive traces 10₄ are distributed over the fourth sensing area 8₄.

Referring to Figs 6A and 6B, the first array 4₁ is positioned adjacent a first edge 30 and the third array 4₃ is positioned adjacent the second edge 32 that opposes the first edge 30.

In this example, the first array 4₁ and the third array 4₃ have the same layout pattern of capacitive sensor electrodes 6, however the third array 4₃ is rotated 180 degrees relative to the first array 4₁.

The first array 4₁ of capacitive sensor electrodes 6 is positioned proximal to a first edge 30 of the sensing arrangement 5 and the second array 4₂ of capacitive sensor electrodes 6 is positioned distal from the first edge 30 and from the second edge 32 of the sensing arrangement 5.

The third array 4₃ of capacitive sensor electrodes 6 is positioned proximal to a second edge 32 of the sensing arrangement 5 and the fourth array 4₄ of capacitive sensor electrodes 6 is positioned distal from the first edge 30 and from the second edge 32 of the sensing arrangement 5.

The first conductive traces 10₁ extend parallel to a first direction (x) from the edge 30 into the first sensing area 8₁. The first conductive traces 10₁ are separated in a second direction (y) (orthogonal to the x direction) so that the first conductive traces 10₁ are distributed over the first sensing area 8₁.

The third conductive traces 10₃ extend parallel to a first direction (x) from the second edge 32 into the third sensing area 8₃. The third conductive traces 10₃ are separated in a second direction (y) (orthogonal to the x direction) so that the third conductive traces 10₃ are distributed over the third sensing area 8₃.

The second conductive traces 10₂ extend, from the first edge 30, parallel to the first direction underneath the first sensing area 8₁ into the second sensing area 8₂. The second conductive traces 10₂ are separated in a second direction (y) so that the second conductive traces 10₂ are distributed over the first sensing area 8₁ and the second sensing area 8₂.

The second conductive traces 10₂ comprise conductive trace portions 18 that have a higher conductivity per unit length than the first conductive traces 10₁.

The higher conductivity conductive trace portions 18 may, for example, be wider than the first conductive traces 10₁ where they extend across an area 19 overlapping the first array 4₁ of capacitive sensor electrodes 6.

The fourth conductive traces 10₄ extend, from the second edge 32, parallel to the first direction underneath the third sensing area 8₃ into the fourth sensing area 8₄. The fourth conductive traces 10₄ are separated in a second direction (y) so that the second conductive traces 10₂ are distributed over the third sensing area 8₃ and the fourth sensing area 8₄.

The fourth conductive traces 10₄ comprise conductive trace portions 18' that have a higher conductivity per unit length than the third conductive traces 10₃.

The higher conductivity conductive trace portions 18 may, for example, be wider than the third (or first) conductive traces 10₃ where they extend across an area 19' overlapping the third array 4₃ of capacitive sensor electrodes 6.

In this example, the second conductive traces 10₂ are routed 18 underneath the first array 4₁ of capacitive sensor electrodes 6 and thus extend across an area overlapping the first array 4₁ of capacitive sensor electrodes 6. The fourth conductive traces 10₄ are routed 18 underneath the third array 4₃ of capacitive sensor electrodes 6 and thus extend across an area 19' overlapping the third array 4₃ of capacitive sensor electrodes 6.

Fig 6C illustrates in more detail an example, according to the third embodiment, of a configuration, in a lower layer 16₂, of second conductive traces 10₂ operatively connected to the second array 4₂ of capacitive sensor electrodes 6.

For clarity of illustration, only one row/column of the second array 4₂ of capacitive sensor electrodes 6 is explicitly illustrated and only some of the capacitive sensor electrodes 6 in that row/column are illustrated. Only the second conductive traces 10₂ operatively connected to the illustrated capacitive sensor electrodes 6 are explicitly illustrated.

In Fig 6C, the second conductive traces 10₂ where they are routed underneath the first array 4i of capacitive sensor electrodes 6 comprise wider portions 18 that have a higher conductivity per unit length than the conductive traces in the first layer 16₁. The higher conductivity conductive trace portions 18 are, in this example, wider than the first conductive traces 10₁ where they extend across the area 19 overlapping the first array 4₁ of capacitive sensor electrodes 6. Bends in the second conductive traces 10₂ are used to route the higher conductivity portions 18 of the second conductive traces 10₂ underneath capacitive sensor electrodes 6 of the first array 4₁ of capacitive sensor electrodes 6.

Fig 6D illustrates in more detail an example, according to the third embodiment, of a configuration, in a lower layer 16₂, of fourth conductive traces 10₄ operatively connected to the fourth array 4₄ of capacitive sensor electrodes 6.

For clarity of illustration, only one row/column of the fourth array 4₄ of capacitive sensor electrodes 6 is explicitly illustrated and only some of the capacitive sensor electrodes 6 in that row/column are illustrated. Only the fourth conductive traces 10₄ operatively connected to the illustrated capacitive sensor electrodes 6 are explicitly illustrated.

In Fig 6D, the fourth conductive traces 10₄ where they are routed underneath the third array 4₃ of capacitive sensor electrodes 6 comprise wider portions 18' that have a higher conductivity per unit length than the conductive traces in the first layer 16₁. The higher conductivity conductive trace portions 18' are, in this example, wider than the third conductive traces 10₃ where they extend across the area 19' overlapping the third array 4₃ of capacitive sensor electrodes 6. Bends in the fourth conductive traces 10₄ are used to route the higher conductivity portions 18' of the fourth conductive traces 10₄ underneath capacitive sensor electrodes 6 of the third array 4₃ of capacitive sensor electrodes 6.

Referring back to Figs 1 and 2, the apparatus 2 may comprises a second shield electrode 20 underlying, in the sensing area 8, the conductive traces 10 and the capacitive sensor electrodes 6.

The second shield electrode 20 may be a continuous uninterrupted single layer electrode that underlies the first and second layers 16₁, 16₂.

Alternatively, the second shield electrode 20 may comprise electrodes that underlie the arrays of capacitive sensor electrodes 6 in the first layer 16₁ and may comprise electrodes, in a different layer, that underlie the arrays of capacitive sensor electrodes 6 in the second layer 16₂. That is the second shield electrode 20 may be a multi-layer electrode (occupying multiple layers) or a single layer electrode (occupying a single layer).

The first shield electrode 12 may be used to cover the conductive traces where they group, outside the sensing area 8, at the first and second edges 30, 32 and at the side 34. The first shield electrode 12 may be used to cover areas that lies outside the sensing area 8.

The conductive traces 10, the capacitive sensor electrodes 6 and the second shield electrode 20 overlie, in this example, a display 40. As they overlie a display 40 they are preferably transparent.

The first shield electrode 12, the conductive traces 10, the capacitive sensor electrodes 6 and the second shield electrode 20 may therefore be formed from conductive and transparent material. They may be formed from the same or similar material or mixtures of material. Examples of suitable conductive and transparent materials include, for example, Indium-Tin-Oxide (ITO), metal mesh, silver nanowires and carbon nanotube composite.

In the above examples, the arrays 4 of capacitive sensor electrodes 6 are each arranged as a regular array and in combination form an array of capacitive sensor electrodes 6 that is an N row by M column regular array, with common fixed spacing between columns and common fixed spacing between rows. However, it should be appreciated that the arrays 4 of capacitive sensor electrodes 6 need not be regular arrays and may be any suitable distribution of capacitive sensor electrodes 6.

In the illustrated examples, each capacitive sensor electrode 6 has an associated conductive trace 10ₙ for conveying a signal generated by that capacitive sensor electrode 6 away from the sensor area 8. In the illustrated example, each capacitive sensor electrode 6 and its associated conductive trace 10ₙ is physically connected. The capacitive sensor electrodes 6 and the associated conductive traces 10ₙ may be arranged within a common plane 16ₘ. They may, for example, be formed by patterning a planar layer of transparent conductive material.

Fig 3 schematically illustrates a cross-section through the sensing arrangement 5 along a line corresponding to a capacitive sensor electrode 6.

The first shield electrode 12 is operatively connected to a node 22. Operatively connected means that there is a signal path but they may or may not be directly physically connected. When the apparatus 2 is operational the node 22 is held at a constant potential such as, for example, ground potential. Circuitry 24 is configured to provide a reference voltage signal to the first shield electrode 12. The circuitry 24 could be a simple galvanic connection to ground provided by, for example, a housing, a ground plane or a chassis.

In this example, a second shield electrode 20 is present. It is also operatively connected to the node 22.

Detection circuitry 26 is operatively connected between the first shield electrode 12 and the array 4 of capacitive sensor electrodes 6.

A multiplexer 28 is operatively connected between the detection circuitry 26 and the array 4 of capacitive sensor electrodes 6. The multiplexer 28 is configured to isolate, for detection, each of the plurality of capacitive sensor electrodes 6 of the array 4.

Drive circuitry 29 is configured to provide an alternating voltage to the first shield electrode 12 and, if present, the second shield electrode 20.

The drive circuitry 29 is configured to provide a time varying electric field at each of the capacitive sensor electrodes 6.

The detection circuitry 26 is configured to detect a variation in capacitance arising from proximity of a user input device 42 to one or more of the plurality of capacitive sensor electrodes 6. The detection circuitry 26 may comprise a low-impedance charge amplifier.

When the user's hand, or some other grounded user input device 42, is brought to the vicinity of the sensing area 8 of the apparatus 2, a capacitive current flows from the first shield electrode 12 through the detection circuitry 26 to one or more capacitive sensor electrodes 6. The charge amplifier in the detection circuitry 26 registers a charge displacement due to the current. The output of the charge amplifier is synchronously rectified and integrated, after which it is passed to an analog-to- digital converter and then provided as digital output 27 for processing in the digital domain.

The drive voltage and the drive frequency typically range from 1 V to 10 V and from 10 to 200 kHz, respectively.

Due to reasons of cost and size, a single charge amplifier and a single analog-to- digital converter may be used in the detection circuitry 26 for multiple capacitive sensor electrodes 6 and a multiplexer 28 may be used to isolate for sensing each capacitive sensor electrode 6 separately.

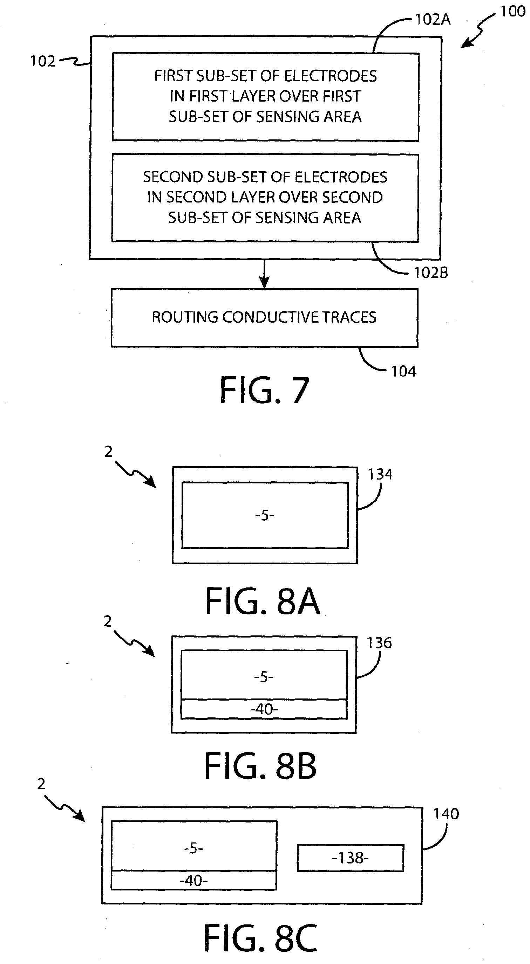

Fig 7 illustrates an example of a method 100.

At block 102, the method 100 comprises arranging capacitive sensor electrodes 6 for touch sensing over a sensing area 8 as 102A a first sub-set 4i of the capacitive sensor electrodes 6, distributed in a first layer 16₁ over a first sub-set 8₁ of the sensing area 8 and as 102B a second sub-set 4₂ of the capacitive sensor electrodes 6, distributed in a second layer 16₂ over a second sub-set 8₂ of the sensing area 8.

Referring back to the previous examples described, the first sub-set 4₁ of the capacitive sensor electrodes 6 correspond to the first array 4₁ of the capacitive sensor electrodes 6. The second sub-set 4₂ of the capacitive sensor electrodes 6 corresponds to the second array 4₂ of the capacitive sensor electrodes 6. The first sub-set 8₁ of the sensing area 8 corresponds to the first sensing area 8₁. The second sub-set 8₂ of the sensing area 8 corresponds to the second sensing area 8₂.

At block 104 the method 100 comprises routing first conductive traces 10₁ to the first sub-set 4₁ of the capacitive sensor electrodes 6 and second conductive traces 10₂ to the second sub-set 4₂ of the capacitive sensor electrodes 6.

As described above, the second conductive traces 10₂ may be routed under the first sub-set 8₁ of the sensing area 8 to reach the second sub-set 8₂ of the sensing area 8.

More highly conductive wider traces 18 are used for the second conductive traces 10₂ under the first sub-set 8₁ of the sensing area 8 than for the first conductive traces 10₁ (see Figs 4C, 5C, 6C, 6D for examples). This keeps the electrical resistance of the second conductive traces 10₂ small to reduce resistance-capacitance (RC) delays and improve measurement speed.

Additional sub-sets 4ₙ of the capacitive sensor electrodes 6, may be distributed in a layer 16ₘ over a nth sub-set 8ₙ of the sensing area 8. Conductive traces 10ₙ may be routed to the sub-set 4ₙ of the capacitive sensor electrodes 6. The conductive traces 10ₙ may be routed underneath other sub-sets 4ₙ of the capacitive sensor electrodes 6 in an overlying layer. Referring back to the previous examples described, the nth sub-set 4₁ of the capacitive sensor electrodes 6 correspond to the third array 4₃ of the capacitive sensor electrodes 6 distributed in the first layer 16₁ (n=3, m=l) and the fourth array 43 of the capacitive sensor electrodes 6 distributed in the second layer 16₂ (n=4, m=2). The conductive traces 10₄ are routed underneath the sub-sets 4₁ of the capacitive sensor electrodes 6 in the overlying layer 16₁ (n'=l, m'=l).

Dividing the capacitive sensor electrodes 6 into arrays 4 may allow different routing configurations of the conductive traces 10 to their respective capacitive sensor electrodes 6 (there is a one-to-one mapping between conductive traces 10 and capacitive sensor electrodes 6). In the illustrated examples, the capacitive sensor electrodes 10 in an array are distributed in two- dimensions and occupy a single layer, each is associated with a particular (x, y) co-ordinate. There is therefore a significant number of conductive traces 10 required (one for each co-ordinate). Different arrays may receive their conductive traces from different edges.

Dividing the arrays 4 of capacitive sensor electrodes 6 into different layers allows different routing configurations of the conductive traces 10 to their respective capacitive sensor electrodes 6, as the routing in one layer is not necessarily constrained by the configuration of conductive traces 10 and capacitive sensor elements 6 in any other layer.

In the example of Figs 4A, 4B, 4C, 5A, 5B, 5C and 6A, 6B, 6C, 6D, the first layer 16₁ may be an upper layer or a lower layer compared to the second layer 16₂.

Fig 8A illustrates the apparatus 2 embodied as a touch panel module 134 that comprises the sensing arrangement 5. The apparatus 2 is operable as a functional sensing arrangement 5 and, with additional components, as a functional display. The touch panel module 134 may be used in combination with a display 40 to form a touch screen display.

Fig 8B illustrates the apparatus 2 embodied as a touch panel module 136 that comprises the sensing arrangement 5 and a display 40. The apparatus 2 is operable as a functional sensing arrangement 5 and as a functional display.

Fig 8C illustrates the apparatus 2 embodied as an electronic device 140 that at least comprises the sensing arrangement 5 and a display 40. The apparatus 2 is operable as a functional display 40 and a functional sensing arrangement 5. The electronic device 38 may, for example, additionally comprise a processor 138 that processes the output 27 of the detection circuitry 26.

As used here 'module' refers to a unit or apparatus that excludes certain parts/components that would be added by an end manufacturer or a user.

In this document reference to an area refers to a two-dimensional space defined by a plane of the x and y components of a touch input position. Reference to an area overlapping another area refers to an intersection of volumes produced by projecting the areas normal to that plane. If areas are overlapping the projected volumes intersect and if the areas do not overlap the projected volumes do not intersect. Reference to an area overlapping another area does not necessarily imply an ordering to layers or components, which may be described explicitly.

Operatively connected means connected in a manner that enables the required functionality (operation). Any number or combination of intervening elements can exist (including no intervening elements) between two items that are operatively connected.

Although embodiments of the present disclosure have been described in the preceding paragraphs with reference to various examples, it should be appreciated that modifications to the examples given can be made without departing from the scope of the invention as claimed.

## Claims

1. An apparatus comprising:
a sensing arrangement (5) configured to sense a variation in capacitance arising from a proximity of a user interface device (42) at or over a sensing area (8) of a touch surface, said sensing arrangement (5) comprising:
a first array (4₁) of capacitive sensor electrodes (6) comprising a first plurality of distinct capacitive sensor electrodes (6) distributed in a first layer (16₁) over a first sensing area (8₁); first conductive traces (10₁) operatively connected to the first plurality of distinct capacitive sensor electrodes (6);
a second array (4₂) of capacitive sensor electrodes (6) comprising a second plurality of distinct capacitive sensor electrodes (6) distributed in a second layer (16₂) over a second sensing area (8₂), wherein the first layer (16₁) and the second layer (16₂) are different layers, and wherein the first sensing area and the second sensing area do not overlap;
second conductive traces (10₂) operatively connected to the second plurality of distinct capacitive sensor electrodes (6),
wherein the second conductive traces (10₂) are routed underneath the first array (4₁) of capacitive sensor electrodes (6), and
wherein the second conductive traces (10₂) where they are routed underneath the first array (4₁) of capacitive sensor electrodes (6) are wider than the first conductive traces (10₁).

2. An apparatus as claimed in claim 1, wherein the second conductive traces (10₂) comprise conductive traces that have a higher conductivity per unit length than the first conductive traces (10₁), and/or
wherein the second conductive traces (10₂) comprise conductive traces that are wider than the first conductive traces (10₁).

3. An apparatus as claimed in any preceding claim, wherein the second layer (16₂) underlies the first layer (16₁).

4. An apparatus as claimed in any preceding claim, wherein the first array (4₁) of capacitive sensor electrodes (6) is positioned proximal to a first edge (30) of the sensing arrangement (5) and the second array (4₂) of capacitive sensor electrodes (6) is positioned distal from the first edge (30) of the sensing arrangement (5), and/or
wherein the first array (4₁) of capacitive sensor electrodes (6) is configured to sense at least two positional components of a touch input that positions the touch input within the first sensing area (8₁) and wherein the second array (4₂) of capacitive sensor electrodes (6) is configured to sense at least two positional components of a touch input that positions the touch input within the second sensing area (8₂).

5. An apparatus as claimed in any preceding claim, wherein the first sensing area (8₁) and the second sensing area (8₂) comprise non-overlapping portions.

6. An apparatus as claimed in any preceding claim, comprising a third array (4₃) of capacitive sensor electrodes comprising a third plurality of distinct capacitive sensor electrodes (6) distributed over a third sensing area (8₃); and
third conductive traces (10₃) operatively connected to the third plurality of distinct capacitive sensor electrodes (6).

7. An apparatus as claimed in claim 6, wherein the third array (4₃) of capacitive sensor electrodes (6) comprising a third plurality of distinct capacitive sensor electrodes (6) is distributed in the first layer (16₁) over the third sensing area (8₃).

8. An apparatus as claimed in claim 6 or 7, comprising: a fourth array (4₄) of capacitive sensor electrodes (6) comprising a fourth plurality of distinct capacitive sensor electrodes (6) distributed, in the second layer (16₂) over a fourth sensing area (8₄) and fourth conductive traces (10₄) operatively connected to the fourth plurality of distinct capacitive sensor electrodes (6), or
wherein the first array (4₁) and the third array (4₃) are positioned adjacent opposing first and second edges (30, 32).

9. An apparatus as claimed in claim 6 or 7, wherein the first array (4₁) and the third array (4₃) are positioned adjacent opposing first and second edges (30, 32),
wherein the first conductive traces (10₁) extend parallel to a first direction (x) from the first edge (30) into the first sensing area (8₁) and wherein the third conductive traces (10₃) extend parallel to the first direction (x) from the second edge (32) into the third sensing area (8₃), and/or
wherein the second conductive traces (10₂) extend, from the first edge (30), parallel to the first direction (x) underneath the first sensing area (8₁) into the second sensing area (8₂) and
wherein the fourth conductive traces (10₄) extend, from the second edge (32), parallel to the first direction (x) underneath the third sensing area (8₃) into the fourth sensing area (8₄).

10. An apparatus as claimed in any of claims 6 or 7, wherein the first array (4₁) is positioned adjacent a first edge (30) and the third array (4₃) is positioned distal from the first edge (30) and from an opposing second edge (32).

11. An apparatus as claimed in claim 10, wherein the first conductive traces (10₁) extend parallel to a first direction (x) from an edge into the first sensing area (8₁) and wherein the third conductive traces (10₃) extend parallel to the first direction (x), from the first edge (30), along a side (34) orthogonal to the first edge (30) and from the side (34) in a second direction (y), orthogonal to the first direction (x), into the third sensing area (8₃), and/or
wherein the second conductive traces (10₂) extend, from the first edge (30), parallel to the first direction (x) underneath the first sensing area (8₁) into the second sensing area (8₂) and
wherein the fourth conductive traces (10₄) extend, from the first edge (30), parallel to the first direction (x) along a side (34) orthogonal to the first edge (30) and from the side (34) parallel to the second direction (y), orthogonal to the first direction (x), into the fourth sensing area (8₄).

12. An apparatus as claimed in any preceding claim, comprising:
a first shield electrode (12) overlying, in the sensing area (8), at least the conductive traces (10); and
a second shield electrode (20) underlying, in the sensing area (8), the conductive traces (10) and the capacitive sensor electrodes (6).

13. An apparatus as claimed in claim 12, comprising a common connection between first and second shield electrode (12, 20), and/or
wherein the second shield electrode (20) is a continuous uninterrupted electrode, and/or
wherein the capacitive sensor electrodes (6), the conductive traces (10) and the second shield electrode (20) are transparent, and/or
comprising detection circuitry (26) connected between the first shield electrode (12) and the capacitive sensor electrodes (6), and/or
comprising circuitry (24) configured to provide a reference voltage signal to the first shield electrode (12), and/or
comprising drive circuitry (29) configured to provide a time varying electric field at each of the capacitive sensor electrodes (6) and detection circuitry (26) configured to detect a variation in capacitance arising from proximity of a user input device (42) to one or more of the plurality of capacitive sensor electrodes (6).

14. An apparatus as claimed in any preceding claim embodied as a touch panel module, and/or
embodied as a touch sensitive display module, and/or
embodied as an electronic device.

15. A method for forming an apparatus comprising a sensing arrangement (5), configured to sense a variation in capacitance arising from proximity of a user interface device (42) at or over a sensing area (8) of a touch surface, wherein said sensing arrangement (5) comprises a first array (41) of capacitive sensor electrodes (6), first conductive traces (101), a second array (42) of capacitive sensor electrodes (6) and second conductive traces (102), the method comprising:
arranging capacitive sensor electrodes (6) for touch sensing over a sensing area (8) as a first array (41) of capacitive sensor electrodes (6) comprising a first plurality of distinct capacitive sensor electrodes (6) distributed in a first layer (161) over a first sensing area (81) and as a second array (42) of capacitive sensor electrodes (6) comprising a second plurality of distinct capacitive sensor electrodes (6) distributed in a second layer (162) over a second sensing area (82), wherein the first layer (161) and second layer (162) are different layers, and wherein the first sensing area and the second sensing area do not overlap;
routing first conductive traces (101) to the first plurality of distinct capacitive sensor electrodes (6) and second conductive traces (102) to the second plurality of distinct capacitive sensor electrodes (6),
wherein the second conductive traces (102) are routed underneath the first array (41) of capacitive sensor electrodes (6), and
wherein the second conductive traces (102) where they are routed underneath the first array (41) of capacitive sensor electrodes (6) are wider than the first conductive traces (101).

## Patentansprüche

1. Einrichtung, die Folgendes umfasst:
eine Erfassungsanordnung (5), die dazu ausgelegt ist, eine Schwankung der Kapazität zu erfassen, die aus einer Nähe einer Benutzerschnittstellenvorrichtung (42) an oder über einem Erfassungsbereich (8) einer Berührungsfläche resultiert, wobei die Erfassungsanordnung (5) Folgendes umfasst:
ein erstes Array (4₁) von kapazitiven Sensorelektroden (6), das eine erste Vielzahl von eindeutigen kapazitiven Sensorelektroden (6) umfasst, die in einer ersten Schicht (16₁) über einen ersten Erfassungsbereich (8₁) verteilt sind;
erste leitfähige Leiterbahnen (10₁), die mit der ersten Vielzahl von eindeutigen kapazitiven Sensorelektroden (6) wirkverbunden sind;
ein zweites Array (4₂) von kapazitiven Sensorelektroden (6), das eine zweite Vielzahl von eindeutigen kapazitiven Sensorelektroden (6) umfasst, die in einer zweiten Schicht (16₂) über einen zweiten Erfassungsbereich (8₂) verteilt sind, wobei die erste Schicht (16₁) und die zweite Schicht (16₂) verschiedene Schichten sind und wobei sich der erste Erfassungsbereich und der zweite Erfassungsbereich nicht überlappen;
zweite leitfähige Leiterbahnen (10₂), die mit der zweiten Vielzahl von eindeutigen kapazitiven Sensorelektroden (6) wirkverbunden sind,
wobei die zweiten leitfähigen Leiterbahnen (10₂) unter dem ersten Array (4₁) der kapazitiven Sensorelektroden (6) geführt werden, und
wobei die zweiten leitfähigen Leiterbahnen (10₂), wo sie unter dem ersten Array (4₁) der kapazitiven Sensorelektroden (6) geführt werden, breiter sind als die ersten leitfähigen Leiterbahnen (10₁).

2. Einrichtung nach Anspruch 1, wobei die zweiten leitfähigen Leiterbahnen (10₂) leitfähige Leiterbahnen umfassen, die pro Längeneinheit eine höhere Leitfähigkeit aufweisen als die ersten leitfähigen Leiterbahnen (10₁), und/oder
wobei die zweiten leitfähigen Leiterbahnen (10₂) leitfähige Leiterbahnen umfassen, die breiter sind als die ersten leitfähigen Leiterbahnen (10₁).

3. Einrichtung nach einem der vorhergehenden Ansprüche, wobei die zweite Schicht (16₂) unter der ersten Schicht (16₁) liegt.

4. Einrichtung nach einem der vorhergehenden Ansprüche, wobei das erste Array (4₁) von kapazitiven Sensorelektroden (6) proximal zu einem ersten Rand (30) der Erfassungsanordnung (5) positioniert ist und das zweite Array (4₂) von kapazitiven Sensorelektroden (6) distal vom ersten Rand (30) der Erfassungsanordnung (5) positioniert ist, und/oder
wobei das erste Array (4₁) der kapazitiven Sensorelektroden (6) dazu ausgelegt ist, mindestens zwei Positionskomponenten einer Berührungseingabe zu erfassen, die die Berührungseingabe im ersten Erfassungsbereich (8₁) positioniert, und wobei das zweite Array (4₂) von kapazitiven Sensorelektroden (6) dazu ausgelegt ist, mindestens zwei Positionskomponenten einer Berührungseingabe zu erfassen, die die Berührungseingabe im zweiten Erfassungsbereich (8₂) positioniert.

5. Einrichtung nach einem der vorhergehenden Ansprüche, wobei der erste Erfassungsbereich (8₁) und der zweite Erfassungsbereich (8₂) nicht überlappende Abschnitte umfassen.

6. Einrichtung nach einem der vorhergehenden Ansprüche, die ein drittes Array (4₃) von kapazitiven Sensorelektroden umfasst, die eine dritte Vielzahl von eindeutigen kapazitiven Sensorelektroden (6) umfassen, die über einen dritten Erfassungsbereich (8₃) verteilt sind; und
dritte leitfähige Leiterbahnen (10₃), die mit der dritten Vielzahl von eindeutigen kapazitiven Sensorelektroden (6) wirkverbunden sind.

7. Einrichtung nach Anspruch 6, wobei das dritte Array (4₃) von kapazitiven Sensorelektroden (6), das eine dritte Vielzahl von eindeutigen kapazitiven Sensorelektroden (6) umfasst, in der ersten Schicht (16₁) über den dritten Erfassungsbereich (8₃) verteilt ist.

8. Einrichtung nach Anspruch 6 oder 7, die Folgendes umfasst: ein viertes Array (4₄) von kapazitiven Sensorelektroden (6), die eine vierte Vielzahl von eindeutigen kapazitiven Sensorelektroden (6) umfassen, die in der zweiten Schicht (16₂) über den vierten Erfassungsbereich (8₄) verteilt sind, und vierte leitfähige Leiterbahnen (10₄), die mit der vierten Vielzahl von eindeutigen kapazitiven Sensorelektroden (6) wirkverbunden sind, oder
wobei das erste Array (4₁) und das dritte Array (4₃) neben gegenüberliegenden ersten und zweiten Rändern (30, 32) positioniert sind.

9. Einrichtung nach Anspruch 6 oder 7, wobei das erste Array (4₁) und das dritte Array (4₃) neben gegenüberliegenden ersten und zweiten Rändern (30, 32) positioniert sind,
wobei sich die ersten leitfähigen Leiterbahnen (10₁) parallel zu einer ersten Richtung (x) vom ersten Rand (30) in den ersten Erfassungsbereich (8₁) erstrecken und wobei sich die dritten leitfähigen Leiterbahnen (10₃) parallel zur ersten Richtung (x) vom zweiten Rand (32) in den dritten Erfassungsbereich (8₃) erstrecken, und/oder
wobei sich die zweiten leitfähigen Leiterbahnen (10₂) vom ersten Rand (30) parallel zur ersten Richtung (x) unter dem ersten Erfassungsbereich (8₁) in den zweiten Erfassungsbereich (8₂) erstrecken und
wobei sich die vierten leitfähigen Leiterbahnen (10₄) vom zweiten Rand (32) parallel zur ersten Richtung (x) unter dem dritten Erfassungsbereich (8₃) in den vierten Erfassungsbereich (8₄) erstrecken.

10. Einrichtung nach Anspruch 6 oder 7, wobei das erste Array (4₁) neben einem ersten Rand (30) positioniert ist und das dritte Array (4₃) distal vom ersten Rand (30) und von einem gegenüberliegenden zweiten Rand (32) positioniert ist.

11. Einrichtung nach Anspruch 10, wobei sich die ersten leitfähigen Leiterbahnen (10₁) parallel zu einer ersten Richtung (x) von einem Rand in den ersten Erfassungsbereich (8₁) erstrecken und wobei sich die dritten leitfähigen Leiterbahnen (10₃) parallel zur ersten Richtung (x) vom ersten Rand (30) entlang einer Seite (34) orthogonal zum ersten Rand (30) und von der Seite (34) in eine zweite Richtung (y) orthogonal zur ersten Richtung (x) in den dritten Erfassungsbereich (8₃) erstrecken, und/oder
wobei sich die zweiten leitfähigen Leiterbahnen (10₂) vom ersten Rand (30) parallel zur ersten Richtung (x) unter dem ersten Erfassungsbereich (8₁) in den zweiten Erfassungsbereich (8₂) erstrecken und
wobei sich die vierten leitfähigen Leiterbahnen (10₄) vom ersten Rand (30) parallel zur ersten Richtung (x) entlang einer Seite (34) orthogonal zum ersten Rand (30) und von der Seite (34) parallel zur zweiten Richtung (y) orthogonal zur ersten Richtung (x) in den vierten Erfassungsbereich (8₄) erstrecken.

12. Einrichtung nach einem der vorhergehenden Ansprüche, die Folgendes umfasst:
eine erste Abschirmungselektrode (12), die im Erfassungsbereich (8) mindestens über den leitfähigen Leiterbahnen (10) liegt; und
eine zweite weitere Abschirmungselektrode (20), die im Erfassungsbereich (8) unter den leitfähigen Leiterbahnen (10) und den kapazitiven Sensorelektroden (6) liegt.

13. Einrichtung nach Anspruch 12, die eine gemeinsame Verbindung zwischen der ersten und der zweiten Abschirmungselektrode (12, 20) umfasst, und/oder
wobei die zweite Abschirmungselektrode (20) eine kontinuierliche ununterbrochene Elektrode ist, und/oder
wobei die kapazitiven Sensorelektroden (6), die leitfähigen Leiterbahnen (10) und die zweite Abschirmungselektrode (20) transparent sind, und/oder
die eine Detektionsschaltung (26) umfasst, die zwischen der ersten Abschirmungselektrode (12) und den kapazitiven Sensorelektroden (6) verbunden ist, und/oder
die eine Schaltung (24) umfasst, die dazu ausgelegt ist, der ersten Abschirmungselektrode (12) ein Referenzspannungssignal bereitzustellen, und/oder
die eine Ansteuerschaltung (29), die dazu ausgelegt ist, an jeder der kapazitiven Sensorelektroden (6) ein zeitvariables elektrisches Feld bereitzustellen, und eine Detektionsschaltung (26), die dazu ausgelegt ist, eine Schwankung der Kapazität zu detektieren, die durch die Nähe einer Benutzereingabevorrichtung (42) zu einer oder mehreren der Vielzahl von kapazitiven Sensorelektroden (6) bewirkt wird, umfasst.

14. Einrichtung nach einem der vorhergehenden Ansprüche, die als ein Touchpanelmodul ausgestaltet ist, und/oder
als ein berührungsempfindliches Anzeigemodul ausgestaltet ist, und/oder
als eine elektronische Vorrichtung ausgestaltet ist.

15. Verfahren zum Bilden einer Einrichtung, die eine Erfassungsanordnung (5) umfasst, die dazu ausgelegt ist, eine Schwankung der Kapazität zu erfassen, die aus einer Nähe einer Benutzerschnittstellenvorrichtung (42) an oder über einem Erfassungsbereich (8) einer Berührungsfläche resultiert, wobei die Erfassungsanordnung (5) ein erstes Array (4₁) von kapazitiven Sensorelektroden (6), erste leitfähige Leiterbahnen (10₁), ein zweites Array (4₂) von kapazitiven Sensorelektroden (6) und zweite leitfähige Leiterbahnen (10₂) umfasst, wobei das Verfahren Folgendes umfasst:
Anordnen von kapazitiven Sensorelektroden (6) zur Berührungserfassung über einem Erfassungsbereich (8) als ein erstes Array (4₁) von kapazitiven Sensorelektroden (6), die eine erste Vielzahl von eindeutigen kapazitiven Sensorelektroden (6) umfassen, die in einer ersten Schicht (16₁) über einem ersten Erfassungsbereich (8₁) verteilt sind, und als ein zweites Array (4₂) von kapazitiven Sensorelektroden (6), die eine zweite Vielzahl von eindeutigen kapazitiven Sensorelektroden (6) umfassen, die in einer zweiten Schicht (16₂) über einen ersten Erfassungsbereich (8₂) verteilt sind, wobei die erste Schicht (16₁) und die zweite Schicht (16₂) verschiedene Schichten sind und wobei sich der erste Erfassungsbereich und der zweite Erfassungsbereich nicht überlappen;
Führen von ersten leitfähigen Leiterbahnen (10₁) zur ersten Vielzahl von eindeutigen kapazitiven Sensorelektroden (6) und zweiten leitfähigen Leiterbahnen (10₂) zur zweiten Vielzahl von eindeutigen kapazitiven Sensorelektroden (6),
wobei die zweiten leitfähigen Leiterbahnen (10₂) unter dem ersten Array (4₁) der kapazitiven Sensorelektroden (6) geführt werden, und
wobei die zweiten leitfähigen Leiterbahnen (10₂), wo sie unter dem ersten Array (4₁) der kapazitiven Sensorelektroden (6) geführt werden, breiter sind als die ersten leitfähigen Leiterbahnen (10₁).

## Revendications

1. Appareil comprenant :
un agencement de détection (5) configuré pour détecter une variation de capacité découlant de la proximité d'un dispositif d'interface utilisateur (42) dans ou sur une zone de détection (8) d'une surface tactile, ledit agencement de détection (5) comprenant :
un premier réseau (4₁) d'électrodes de capteur capacitif (6) comprenant une première pluralité d'électrodes de capteur capacitif (6) distinctes réparties dans une première couche (16₁) sur une première zone de détection (8₁) ;
des premières traces conductrices (10₁) connectées fonctionnellement à la première pluralité d'électrodes de capteur capacitif (6) distinctes ;
un deuxième réseau (4₂) d'électrodes de capteur capacitif (6) comprenant une deuxième pluralité d'électrodes de capteur capacitif (6) distinctes réparties dans une deuxième couche (16₂) sur une deuxième zone de détection (8₂), dans lequel la première couche (16₁) et la deuxième couche (16₂) sont des couches différentes, et dans lequel la première zone de détection et la deuxième zone de détection ne se chevauchent pas ;
des deuxièmes traces conductrices (10₂) connectées fonctionnellement à la deuxième pluralité d'électrodes de capteur capacitif (6) distinctes,
dans lequel les deuxièmes traces conductrices (10₂) sont acheminées de manière sous-jacente vers le premier réseau (4₁) d'électrodes de capteur capacitif (6), et
dans lequel les deuxièmes traces conductrices (10₂), à l'endroit où elles sont acheminées de manière sous-jacente vers le premier réseau (4₁) d'électrodes de capteur capacitif (6), sont plus larges que les premières traces conductrices (10₁).

2. Appareil selon la revendication 1, dans lequel les deuxièmes traces conductrices (10₂) comprennent des traces conductrices qui ont une conductivité par unité de longueur plus élevée que les premières traces conductrices (10₁), et/ou
dans lequel les deuxièmes traces conductrices (10₂) comprennent des traces conductrices qui sont plus larges que les premières traces conductrices (10₁).

3. Appareil selon l'une quelconque des revendications précédentes, dans lequel la deuxième couche (16₂) est sous-jacente à la première couche (16₁).

4. Appareil selon l'une quelconque des revendications précédentes, dans lequel le premier réseau (4₁) d'électrodes de capteur capacitif (6) est positionné de manière proximale par rapport à un premier bord (30) de l'agencement de détection (5), et le deuxième réseau (4₂) d'électrodes de capteur capacitif (6) est positionné de manière distale par rapport au premier bord (30) de l'agencement de détection (5), et/ou
dans lequel le premier réseau (4₁) d'électrodes de capteur capacitif (6) est configuré pour détecter au moins deux composantes de position d'une entrée tactile qui positionne l'entrée tactile dans la première zone de détection (8₁), et dans lequel le deuxième réseau (4₂) d'électrodes de capteur capacitif (6) est configuré pour détecter au moins deux composantes de position d'une entrée tactile qui positionne l'entrée tactile dans la deuxième zone de détection (8₂).

5. Appareil selon l'une quelconque des revendications précédentes, dans lequel la première zone de détection (8₁) et la deuxième zone de détection (8₂) comprennent des parties non chevauchantes.

6. Appareil selon l'une quelconque des revendications précédentes, comprenant un troisième réseau (4₃) d'électrodes de capteur capacitif comprenant une troisième pluralité d'électrodes de capteur capacitif (6) distinctes réparties sur une troisième zone de détection (8₃) ; et
des troisièmes traces conductrices (10₃) connectées fonctionnellement à la troisième pluralité d'électrodes de capteur capacitif (6) distinctes.

7. Appareil selon la revendication 6, dans lequel le troisième réseau (4₃) d'électrodes de capteur capacitif (6) comprenant une troisième pluralité d'électrodes de capteur capacitif (6) distinctes est réparti dans la première couche (16₁) sur la troisième zone de détection (8₃).

8. Appareil selon la revendication 6 ou 7, comprenant :
un quatrième réseau (4₄) d'électrodes de capteur capacitif (6) comprenant une quatrième pluralité d'électrodes de capteur capacitif (6) distinctes réparties dans la deuxième couche (16₂) sur une quatrième zone de détection (8₄), et des quatrièmes traces conductrices (10₄) connectées fonctionnellement à la quatrième pluralité d'électrodes de capteur capacitif (6) distinctes, ou
dans lequel le premier réseau (4₁) et le troisième réseau (4₃) sont positionnés de façon adjacente aux premier et deuxième bords opposés (30, 32).

9. Appareil selon la revendication 6 ou 7, dans lequel le premier réseau (4₁) et le troisième réseau (4₃) sont positionnés de manière adjacente aux premier et deuxième bords opposés (30, 32),
dans lequel les premières traces conductrices (10₁) s'étendent parallèlement à une première direction (x) depuis le premier bord (30) dans la première zone de détection (8₁), et dans lequel les troisièmes traces conductrices (10₃) s'étendent parallèlement à la première direction (x) depuis le deuxième bord (32) dans la troisième zone de détection (8₃), et/ou
dans lequel les deuxièmes traces conductrices (10₂) s'étendent depuis le premier bord (30) parallèlement à la première direction (x) de manière sous-jacente à la première zone de détection (8₁) dans la deuxième zone de détection (8₂) et
dans lequel les quatrièmes traces conductrices (10₄) s'étendent depuis le deuxième bord (32) parallèlement à la première direction (x) de manière sous-jacente à la troisième zone de détection (8₃) dans la quatrième zone de détection (84).

10. Appareil selon l'une quelconque des revendications 6 ou 7, dans lequel le premier réseau (4₁) est positionné de manière adjacente à un premier bord (30), et le troisième réseau (4₃) est positionné de manière distale par rapport au premier bord (30) et par rapport à un deuxième bord (32) opposé.

11. Appareil selon la revendication 10, dans lequel les premières traces conductrices (10₁) s'étendent parallèlement à une première direction (x) depuis un bord dans la première zone de détection (8₁), et dans lequel les troisièmes traces conductrices (10₃) s'étendent parallèlement à la première direction (x) depuis le premier bord (30) le long d'un côté (34) orthogonal au premier bord (30), et depuis le côté (34) dans une deuxième direction (y) orthogonale à la première direction (x), dans la troisième zone de détection (8₃), et/ou
dans lequel les deuxièmes traces conductrices (10₂) s'étendent depuis le premier bord (30) parallèlement à la première direction (x) de manière sous-jacente à la première zone de détection (8₁) dans la deuxième zone de détection (8₂) et
dans lequel les quatrièmes traces conductrices (10₄) s'étendent depuis le premier bord (30) parallèlement à la première direction (x) le long d'un côté (34) orthogonal au premier bord (30), et depuis le côté (34) parallèle à la deuxième direction (y) orthogonale à la première direction (x), dans la quatrième zone de détection (8₄).

12. Appareil selon l'une quelconque des revendications précédentes, comprenant :
une première électrode de blindage (12) chevauchant, dans la zone de détection (8), au moins les traces conductrices (10) ; et
une deuxième électrode de blindage (20) sous-jacente, dans la zone de détection (8), aux traces conductrices (10) et aux électrodes de capteur capacitif (6).

13. Appareil selon la revendication 12, comprenant une connexion commune entre les première et deuxième électrodes de blindage (12, 20), et/ou
dans lequel la deuxième électrode de blindage (20) est une électrode continue ininterrompue, et/ou dans lequel les électrodes de capteur capacitif (6), les traces conductrices (10) et la deuxième électrode de blindage (20) sont transparentes, et/ou
comprenant un ensemble de circuits de détection (26) connecté entre la première électrode de blindage (12) et les électrodes de capteur capacitif (6), et/ou
comprenant un ensemble de circuits (24) configuré pour fournir un signal de tension de référence à la première électrode de blindage (12), et/ou
comprenant un ensemble de circuits d'attaque (29) configuré pour fournir un champ électrique variant dans le temps à chacune des électrodes de capteur capacitif (6), et un ensemble de circuits de détection (26) configuré pour détecter une variation de capacité découlant de la proximité d'un dispositif d'entrée utilisateur (42) avec une ou plusieurs de la pluralité d'électrodes de capteur capacitif (6).

14. Appareil selon l'une quelconque des revendications précédentes conçu sous la forme d'un module de panneau tactile, et/ou
conçu sous la forme d'un module d'affichage sensible au toucher, et/ou
conçu sous la forme d'un dispositif électronique.

15. Procédé de formation d'un appareil comprenant un agencement de détection (5) configuré pour détecter une variation de capacité découlant de la proximité d'un dispositif d'interface utilisateur (42) dans ou sur une zone de détection (8) d'une surface tactile, dans lequel ledit agencement de détection (5) comprend un premier réseau (4₁) d'électrodes de capteur capacitif (6), des premières traces conductrices (10₁), un deuxième réseau (4₂) d'électrodes de capteur capacitif (6) et des deuxièmes traces conductrices (10₂), le procédé comprenant :
l'agencement d'électrodes de capteur capacitif (6) pour une détection tactile sur une zone de détection (8) comme premier réseau (4₁) d'électrodes de capteur capacitif (6) comprenant une première pluralité d'électrodes de capteur capacitif (6) distinctes réparties dans une première couche (16₁) sur une première zone de détection (8₁), et comme deuxième réseau (4₂) d'électrodes de capteur capacitif (6) comprenant une deuxième pluralité d'électrodes de capteur capacitif (6) distinctes réparties dans une deuxième couche (16₂) sur une deuxième zone de détection (8₂), dans lequel la première couche (16₁) et la deuxième couche (16₂) sont des couches différentes, et dans lequel la première zone de détection et la deuxième zone de détection ne se chevauchent pas ;
l'acheminement de premières traces conductrices (10₁) vers la première pluralité d'électrodes de capteur capacitif (6) distinctes, et de deuxièmes traces conductrices (10₂) vers la deuxième pluralité d'électrodes de capteur capacitif (6) distinctes,
dans lequel les deuxièmes traces conductrices (10₂) sont acheminées de manière sous-jacente vers le premier réseau (4₁) d'électrodes de capteur capacitif (6), et
dans lequel les deuxièmes traces conductrices (10₂), à l'endroit où elles sont acheminées de manière sous-jacente vers le premier réseau (4₁) d'électrodes de capteur capacitif (6), sont plus larges que les premières traces conductrices (10₁).
